# EUROPÄISCHE PATENTSCHRIFT

(11) **EP 2 098 146 B1**
(45) Veröffentlichungstag und Bekanntmachung des Hinweises auf die Patenterteilung: **21.03.2012**
(21) Anmeldenummer: 09100107.3
(22) Anmeldetag: 11.02.2009
(51) Int. Cl.: A47J 31/46

(54) **Kaffeemaschine sowie Mehrwegeventil für eine Kaffeemaschine**
Coffee machine and distributing valve for a coffee machine
Machine à café et soupape à plusieurs voies pour une machine à café

(30) Priorität: 08.03.2008 DE 202008003303 U
(43) Veröffentlichungstag der Anmeldung: 09.09.2009
(73) Patentinhaber: WIK Far East Ltd., North Point, Hong Kong (CN)
(72) Erfinder: Meuer, Jens Martin, 47269 Duisburg (DE)
(74) Vertreter: Haverkamp, Jens

(56) Entgegenhaltungen:
- EP-A- 0 781 520
- EP-A- 1 106 126
- DE-A1-102004 062 746

## Beschreibung

Die Erfindung betrifft eine Kaffeemaschine mit einem Mehrwegeventil laut Anspruch 1. Ferner betrifft die Erfindung ein Mehrwegeventil für eine Kaffeemaschine laut Anspruch 9.

Kaffeemaschinen, insbesondere so genannte Vollautomaten, mit denen tassenweise Kaffee gebrüht wird, verfügen typischerweise neben einer Brüheinheit zum Brühen des Kaffees und einem damit verbundenen Kaffeeauslauf über weitere Einrichtungen und/oder Auslässe. Neben dem Vorgang des Kaffeebrühens kann mit einer solchen Kaffeemaschine unter Umgehung der Brüheinheit auch Heißwasser, beispielsweise zum Bereiten von Tee bereitgestellt werden. Ferner verfügen derartige Kaffeemaschinen typischerweise über einen Dampfauslass, an den eine Milchaufschäumeinrichtung angeschlossen sein kann. Das für die unterschiedlichen Zwecke benötigte Wasser wird in einem für alle Anwendungen gemeinsamen Wasserbehälter bevorratet. Von diesem führt eine Leitung über eine Pumpe zu einer Heizeinrichtung, typischerweise einem so genannten Thermoblock, der das durch die Pumpe geförderte Wasser im Zuge des Durchströmens durch den Thermoblock nach Art eines Durchlauferhitzers auf die gewünschte Temperatur erwärmt. Zum Zuführen des erhitzten Wassers oder auch des bei entsprechender Ansteuerung des Thermoblockes gebildeten Dampfes zu dem jeweiligen Auslass oder der Einrichtung dient ein Mehrwegeventil. Dieses verfügt über ein Ventilgehäuse mit einem Zulauf, durch den das durch die Pumpe geförderte und durch den Thermoblock erwärmte Wasser in das Ventilgehäuse eintritt. Das Ventilgehäuse verfügt über mehrere Abgänge. Typischerweise ist ein Abgang des Mehrwegeventils die Leitung zum Zuführen des erhitzten Wassers zu der Brüheinheit, ein weiterer Abgang die Leitung zum Zuführen des erhitzten Wassers an einen Heißwasserauslauf und noch ein weiterer Abgang die Leitung zum Zuführen von im Thermoblock gebildetem Dampf an einen Dampfauslass. Bei der vorbeschriebenen Ausgestaltung verfügt der Ventilkörper über drei Abgänge.

Gemäß einer vorbekannten Ausgestaltung ist in das Ventilgehäuse in den drei Abgängen jeweils ein Absperrorgan zum Absperren oder Freigeben desselben angeordnet. Als Absperrorgan dient gemäß dem vorbekannten Stand der Technik jeweils ein Stößel. Diese stehen unter Federvorspannung und werden durch die Federvorspannung in ihrer jeweiligen Geschlossen-Position gehalten. Zum Betätigen der Stößel verfügt das Dreiwegeventil über ein gegenüber den Stößeln drehbar gelagertes Stellorgan. Das Stellorgan verfügt über ein oder mehrere Steuerkurven, wobei sich jeder Stößel auf einer solchen Steuerkurve abstützt. Es ist durchaus möglich, dass sich sämtliche Ventilstößel an ein und derselben Steuerkurve abstützen. Eine solche Steuerkurve ist gebildet durch nockenartige Erhöhungen an bestimmten Stellen, und zwar an denjenigen, an denen der diese Steuerkurve zugeordnete Ventilstößel sich in seiner Offenstellung befinden soll. Betätigt wird das Stellorgan über einen an der Außenseite der Kaffeemaschine angeordneten Bedienschalter. Mit diesem wird der jeweils gewünschte Auslauf bzw. Auslass angesteuert. In Anhängigkeit von der jeweiligen Stellung des Stellorgans ist derjenige Abgang des Mehrwegeventils geöffnet, dem das erhitzte Wasser (oder auch der generierte Dampf) zugeführt werden soll. Dabei ist es durchaus möglich, dass bei einem Programm auch zwei oder beispielsweise für Reinigungszwecke auch drei bzw. alle Abgänge geöffnet sind.

Ein Mehrwegeventil mit einem anderen Stell- bzw. Schaltkonzept ist aus EP 1 106 126 A1 bekannt. Bei diesem vorbekannten Mehrwegeventil wird eine Scheibensteuerung eingesetzt, um einen die Scheiben beaufschlagenden Zulauf mit einem oder mehreren Abgängen zu verbinden. Zu diesem Zweck ist die Scheibe drehbar innerhalb des Ventilgehäuses gelagert. Angetrieben wird dieses Scheibe durch einen ein Antriebsritzel tragenden Elektromotor, der seinerseits ein in Drehverbindung mit der Scheiben stehenden Abriebsritzel antreibt. Zum Steuern einer größeren anzahl an Zuläufen und Abgängen verfügt dieses vorbekannte Mehrwegeventil über zwei derartige Scheibensteuereinrichtungen, die beide jeweils über ein Zahnrad von dem gemeinsamen motorisch angetriebenen Antriebsritzel angetrieben sind.

Kaffeemaschinen, die mit einer dampfbetriebenen Milchaufschäumeinrichtung ausgerüstet sind, verfügen oftmals auch über eine Milchzufuhrleitung, über die die zum Aufschäumen benötigte Milch zugeführt wird. In Abhängigkeit von der gewünschten Ausbildung des Milchschaums ist es mitunter erforderlich, der Aufschäumeinrichtung nicht lediglich Milch, sondern ein Milch-Luft-Gemisch zuzuführen. Um dieses zu ermöglichen, mündet in die Milchleitung vor der Aufschäumeinrichtung eine Luftzufuhrleitung. Da eine Luftzufuhr in die Milchleitung nicht immer gewünscht ist, ist in die Luftzuführleitung ein Absperrventil eingeschaltet. Dieses muss, wenn Luft in die Milchzuführleitung eingebracht werden soll, separat manuell betätigt werden. Auch sind elektromagnetisch arbeitende Ventile verwendet worden, um die Luftzufuhr in der Luftzuführleitung absperren oder umgekehrt diese gestatten zu können. Es wäre wünschenswert, wenn die Steuerung eines solchen Ventils vereinfacht werden könnte.

Ausgehend von diesem diskutierten Stand der Technik liegt der Erfindung daher die Aufgabe zugrunde, eine eingangs genannte Kaffeemaschine dergestalt weiterzubilden, dass eine Ansteuerung des einer zusätzlichen, von der oder den wasser- oder dampfführenden Leitung unabhängigen Leitung zugeordneten Ventils sich mit einfacheren Mitteln, insbesondere ohne zusätzlichen Montageaufwand realisieren lässt.

Gelöst wird diese Aufgabe durch eine Kaffeemaschine mit einem Mehrwegeventil laut Anspruch 1.

Bei dieser Kaffeemaschine ist das der wenigstens einen weiteren unterschiedlichen Leitung, also beispielsweise der Luftzuführleitung zugeordnete Ventil dem in der Kaffeemaschine ohnehin vorhandenen Mehrwegeventil zugeordnet. Dieses bedeutet, dass bei der Montage einer solchen Kaffeemaschine nur noch ein einziges Bauteil, nämlich das Mehrwegeventil zu montieren ist. Das beispielsweise der Luftzuführleitung zugeordnete Ventil verfügt über ein Absperrorgan, welches zu seiner Betätigung in Wirkverbindung mit dem ohnehin vorhandenen Stellorgan steht. Zu diesem Zweck verfügt das Stellorgan über eine Steuerkurve zum Betätigen des Absperrorgans dieses weiteren Ventils. Eine Ansteuerung des Absperrorgans kann unmittelbar an der Steuerkurve des Stellorgans oder auch unter Zwischenschaltung eines Stellstößels oder anderer bewegungsübertragender Elemente erfolgen. Bei der Konzeption dieses weiteren Ventils macht man sich die ohnehin vorhandenen Stellelemente zunutze, so dass für dieses weitere Ventil kein eigenes Stellorgan benötigt wird. Dieses hat ferner zum Vorteil, dass die Ansteuerung der in die einzelnen Leitungen der Kaffeemaschine integrierten Absperrorgane zentral durch ein einziges Stellorgan erfolgt. Das Stellorgan kann beispielsweise nach Art eines Stellzylinders ausgebildet sein. Es stehen sodann die beiden Stirnflächen und die Umfangsfläche zur Verfügung, um Steuerkurven zur Ansteuerung der Absperrorgane oder auch anderer Elemente anordnen zu können. Gerade bei einem Einsatz vollautomatischer Kaffeemaschinen ist eine solche Ausgestaltung zweckmäßig. In einem solchen Fall ist bevorzugt, das Stellorgan elektromotorisch angetrieben zu bewegen. Das Stellorgan kann sodann über Steuerkurven zum Betätigen elektrischer Schalter verfügen, durch die eine Winkelstellungserfassung des Stellorgans und damit die Stellung der den Absperrorganen zugeordneten Steuerkurven erfasst werden kann.

Die Rahmenstruktur des Mehrwegeventils kann genutzt werden, um das von den wasser- bzw. dampfführenden Leitungen unabhängige Ventil zu halten. Handelt es sich bei der Leitung, in die das weitere Ventil integriert ist, um eine Luftzuführleitung, braucht lediglich ein Ventilabgang vorgesehen zu werden. Der Ventileingang ist durch den Ventilsitz selbst gebildet. Das Absperrorgan ist typischerweise als Verschlusskörper zum Verschließen des Ventilsitzes als offenes Ende der Luftzuführleitung ausgebildet.

Auf diese Weise können über das Mehrwegeventil bzw. dessen Stellorgan ein oder mehrere weitere Ventile angesteuert werden.

Einsetzen lässt sich ein Mehrwegeventil, wie vorbeschrieben, auch für andere Einrichtungen. Daher ist das Mehrwegeventil als solches auch unabhängig beansprucht.

Nachfolgend ist die Erfindung anhand eines Ausführungsbeispiels unter Bezugnahme auf die beigefügten Figuren beschrieben. Es zeigen:
- **Fig. 1:**: eine perspektivische Ansicht eines Mehrwegeventils,
- **Fig. 2:**: eine perspektivische Ansicht auf die Unterseite des in Figur 1 dargestellten Mehrwegeventils,
- **Fig. 3:**: eine Darstellung nach Art einer Explosionsdarstellung zum Darstellen eines Einblickes in das Ventilgehäuse des Mehr- wegeventils der Figuren 1 und 2,
- **Fig. 4:**: eine perspektivische Darstellung des Mehrwegeventils unter Weglassung eines Gehäuseteils zum Darstellen der Ansteu- erung des Absperrorgans eines weiteren Ventils und
- **Fig. 5a, 5b:**: einen schematisierten Teilschnitt durch die zur Ansteuerung des Absperrorgans des weiteren Ventils eingesetzten Ele- mente des Mehrwegeventils bei geschlossenem Ventil (Figur 5a) und bei geöffnetem Venitl Figur 5b)

Ein Mehrwegeventil 1 für eine als Vollautomat ausgebildete und als solche nicht näher dargestellte Kaffeemaschine verfügt über einen Elektromotor 2 zum Antreiben eines dem Mehrwegeventil 1 zugeordneten Stellorgans. Der Elektromotor 2 sitzt auf einer Montageplatte 3. An der Montageplatte 3 ist ein Ventilgehäuse 4 befestigt. Das Ventilgehäuse 4 verfügt über einen Zulaufanschlussstutzen 5. Auf den Zulaufanschlussstutzen 5 ist ein in den Figuren nicht näher dargestellter Schlauch aufgesteckt, durch den das von einem zentralen Wasserbehälter der Kaffeemaschine geförderte und durch einen Thermoblock auf die gewünschte Temperatur erhitzte Wasser zugeführt wird. Das Mehrwegeventil 1 dient zum Verteilen bzw. Zuführen des durch den Zulaufanschlussstutzen 5 zugeführten Heißwassers oder Heißdampfes an die das Heißwasser entsprechend dem jeweils gewünschten Programmablauf benötigende Einrichtung oder bei einer gewünschten Heißwasserausgabe an den diesbezüglichen Auslauf. Über den Thermoblock kann ebenfalls Heißdampf für einen Dampfauslass gebildet werden, der über das Mehrwegeventil einem Dampfauslass zugeleitet wird. Bei dem dargestellten Ausführungsbeispiel verfügt das Ventilgehäuse 4 über drei Abgänge, auf denen jeweils ein Schlauchabschnitt aufgesetzt ist. Der auf den einen Abgang des Ventilgehäuses 4 aufgesetzte Schlauch 6 bildet den Dampfabgang. Der Schlauch 7 dient als Zuführschlauch zum Zuführen von Heißwasser an die Brüheinheit. Der Schlauch 8 dient als Rückführleitung zum Wassertank.

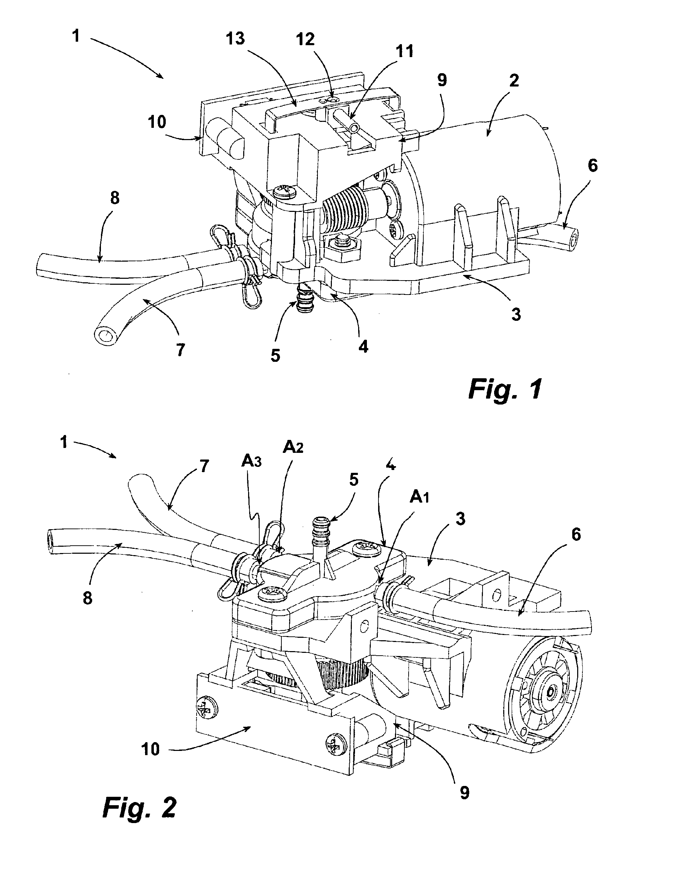

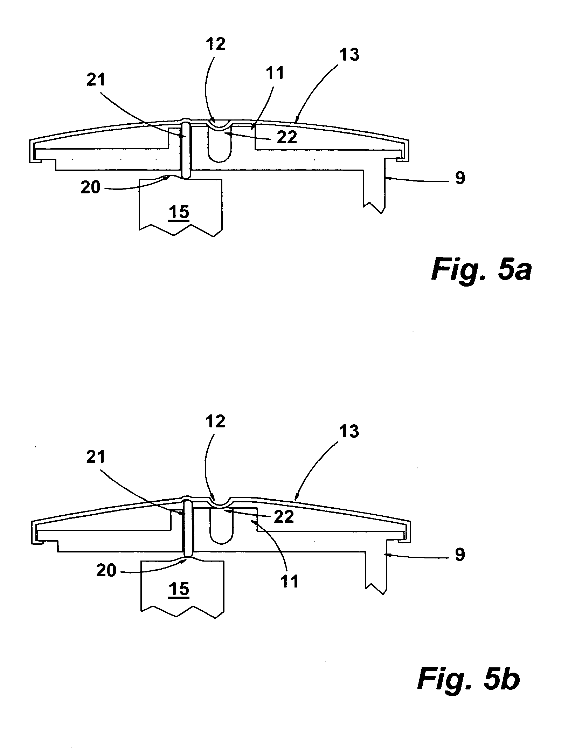

Angeschlossen an die Montageplatte 3 ist ein Trägerformteil 9. Das Trägerformteil 9 trägt an seiner in Figur 1 erkennbaren Rückseite eine Platine 10, auf der mehrere Mikroschalter angeordnet sind. Das Trägerformteil 9 trägt des Weiteren ein Anschlussstück 11 für eine Luftzuführleitung. Die eigentliche Luftzuführleitung, die ebenfalls als Schlauch konzipiert ist, ist in Figur 1 nicht dargestellt. Diese ist auf das Anschlussstück 11 aufgesteckt. Bei dem Anschlussstück 11 handelt es sich um ein Anschlussstück mit einer Winkelbohrung, deren obere Mündung von einem durch eine Sicke 12 eines Bügels 13 gebildeten Verschlusskörper in der Figur 1 gezeigten Stellung verschlossen ist. Der Bügel 13 ist an dem Trägerformteil 9 gehalten, wie dieses sich aus den Figuren 5a, 5b ergibt. Das Anschlussstück 11 bzw. die daran angeschlossene Luftzuführleitung ist völlig unabhängig von dem Ventilgehäuse 4 und den wasser- bzw. dampfführenden Leitungen, die an das Ventilgehäuse 4 angeschlossen sind.

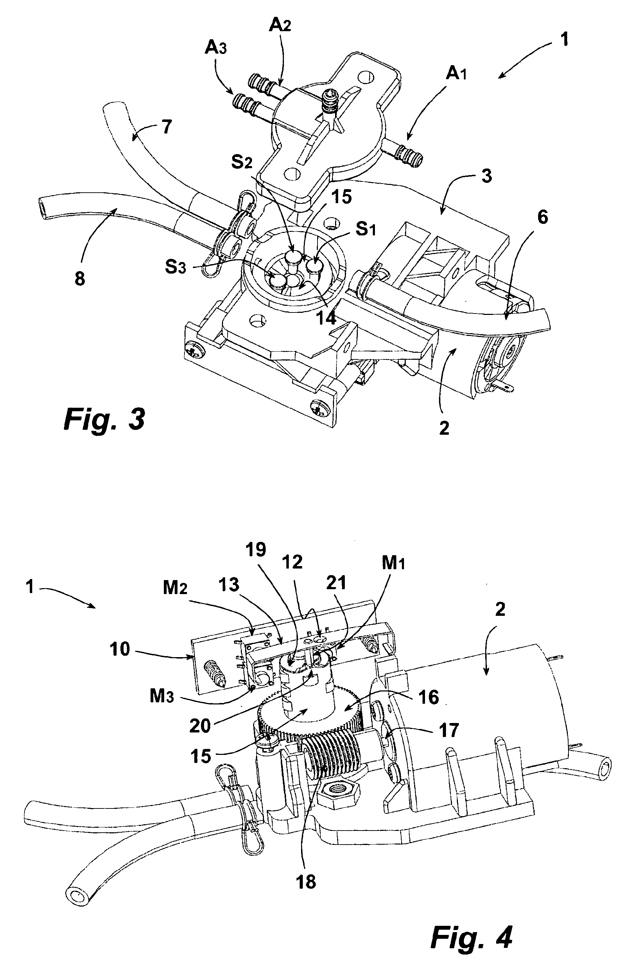

Figur 3 zeigt in einer Unteransicht die Anordnung der Abgänge A₁ - A₃ des Ventilgehäuses 4, auf die wiederum die Schläuche 6, 7 bzw. 8 als Abgangsleitungen aufgesteckt sind. Zum Sperren bzw. Freigeben der Abgänge A₁, A₂ und/oder A₃ dient jeweils ein, einem jeden Abgang A₁, A₂ bzw. A₃ zugeordneter Stößel S₁, S₂, S₃, wie dieses aus der Darstellung der Fig. 3 erkennbar ist, die das geöffnete Ventilgehäuse 4 zeigt. Die Stößel S₁ - S₃ stützen sich auf der Stirnseite 14 eines zylindrischen Stellorgans 15 ab. Das Stellorgan 15 trägt an der Stirnseite 14 eine Steuerkurve, die an denjenigen Stellen eine nockenartige Erhöhung aufweist, an der ein Stößel S₁ - S₃ in seine Offenstellung gebracht werden soll. Das Stellorgan 15 ist zu diesem Zweck durch den Elektromotor 2 drehbar angetrieben. Die Stößel S₁ - S₃ werden durch jeweils ein federartig reagierendes Rückstellelement in ihrer, den jeweiligen Abgang A₁, A₂ bzw. A₃ verschließenden Stellung gehalten.

Die Ausbildung des zylindrischen Stellorgans 15 und der rotatorische Antrieb desselben ist in Figur 4 erkennbar. Das Stellorgan 15 ist mit einem Abtriebsritzel 16 verbunden, welches wiederum von einer auf der Antriebswelle 17 des Elektromotors 2 sitzenden Schnecke 18 angetrieben wird. Somit kämmt die Schnecke 18 das Abtriebsritzel 16. An der in Figur 4 nicht erkennbaren Unterseite des zylindrischen Stellorgans 15 befindet sich die Stirnseite 14 mit der Steuerkurve zum Betätigen der Stößel S₁ - S₃. Auf der zylindrischen Umfangsfläche des Stellorgans 15 befinden sich mehrere Steuerkurven, wie durch die in Figur 4 erkennbaren Schaltnocken erkennbar. An diesen Schaltnocken stützen sich in Figur 4 nicht dargestellte Betätigungsarme ab, die wiederum mit den auf der Platine 10 angeordneten Mikroschaltern M₁ - M₃ zum Schalten derselben in Wirkverbindung stehen. Die Mikroschalter M₁ - M₃ dienen zur Positionserfassung des Stellorgans 15 hinsichtlich seiner aktuellen Winkelstellung. Die Mikroschalter M₁ - M₃ sind wiederum an eine nicht dargestellte Auswerteeinheit, etwa einen Prozessor, angeschlossen, der die aktuelle Winkelstellung des Stellorgans 15 überwacht.

Auf der, der Stirnseite 14 des Stellorgans 15 gegenüberliegenden Stirnseite 19 ist ebenfalls eine Steuerkurve ausgebildet. Ein Steuernocken dieser Steuerkurve ist mit dem Bezugszeichen 20 gekennzeichnet. Auf der der Stirnseite 19 zugeordneten Steuerkurve stützt sich ein Betätigungsstößel 21 ab, der zum Betätigen des durch die Sicke 12 des Bügels 13 gebildeten Absperrorgans dient. Der Betätigungsstößel 21 greift ein in eine zu der Stirnseite 19 des Stellorgans 15 weisende, eingeprägte Vertiefung. Diese ist benachbart zu der Sicke 12 angeordnet. Somit dient dieser zu der Sicke 12 benachbarte Abschnitt als Stellfortsatz. Der Bügel 13 ist aus einem federelastisch reagierenden Material, insbesondere Federstahl, hergestellt. Dieser wirkt mit einer gewissen Vorspannung auf den Betätigungsstößel 21, damit dieser in seiner in Figur 4 gezeigten Stellung verbleibt. Der Betätigungsstößel 21 selbst ist in dem in Figur 4 nicht dargestellten Trägerbauteil 9 in einer Bohrung geführt. Figur 4 zeigt das Stellorgan 15 in einer Stellung der Steuernocke 20, in der der durch das Anschlussstück 11 gebildete weitere Ventilkörper geöffnet ist. Wird das Stellorgan 15 gedreht, wird durch die Federkraft des Bügels 13 der Betätigungsstößel 21 herabgedrückt, sodass die geschlossene Sicke 12 zum Verschließen der diesbezüglichen Öffnung des Anschlussstücks 11 abgesenkt wird. Somit bildet die in Figur 1 nach oben weisende Öffnung 22 der Winkelbohrung des Anschlussstücks 11 den Ventilsitz. Die offene und geschlossene Stellung des durch die Sicke 12 gebildeten Absperrorgans ist in Figur 5a (geschlossenem Anschlussstück 11) und in Figur 5b (geöffneten Anschlussstück 11) gezeigt.

Die an das Anschlussstück 11 angeschlossene Luftzuführleitung mündet mit ihrem anderen Ende in eine Milchzuführleitung, und zwar mit kurzem Abstand vor einer an den Dampfauslass der Kaffeemaschine angeschlossenen Aufschäumeinrichtung.

Mit dem beschriebenen Mehrwegeventil ist es mit einem einzigen Aktor, nämlich dem Elektromotor 2 und dem von diesem angetriebenen Stellorgan 15 möglich, nicht nur die Wasser- bzw. Dampfführung in Abhängigkeit von dem gewählten Programm zu steuern, sondern unter Ausnutzung desselben Stellorgans 15 ebenfalls zum Schalten eines in eine von den vorgenannten Leitungen unabhängige Leitung eingeschalteten Ventils.

### Bezugszeichenliste

| | |
|---|---|
| 1 | Mehrwegeventil |
| 2 | Elektromotor |
| 3 | Montageplatte |
| 4 | Ventilgehäuse |
| 5 | Zulaufanschlussstutzen |
| 6 | Schlauch |
| 7 | Schlauch |
| 8 | Schlauch |
| 9 | Trägerformteil |
| 10 | Platine |
| 11 | Anschlussstück |
| 12 | Sicke |
| 13 | Bügel |
| 14 | Stirnseite |
| 15 | Stellorgan |
| 16 | Abtriebsritze |
| 17 | Antriebswelle |
| 18 | Schnecke |
| 19 | Stirnseite |
| 20 | Steuernocke |
| 21 | Betätigungsstößel |
| 22 | Öffnung |
| A₁ - A₃ | Abgang |
| M₁ - M₃ | Mikroschalter |
| S₁ - S₃ | Stößel |

## Patentansprüche

1. Kaffeemaschine mit einem Mehrwegeventil (1), umfassend ein zumindest einen Zulauf und mehrere damit in Verbindung stellbare Abgänge (A₁ - A₃) aufweisendes Ventilgehäuse (4), wenigstens ein zum Absperren eines oder mehrerer Abgänge dienendes Absperrorgan (S₁ - S₃) und ein mit dem wenigstens einen Absperrorgan (S₁ - S₃) über eine Schaltkulisse zum Betätigen des zumindest einen Absperrorgans (S₁ - S₃) in Wirkverbindung stehendes Stellorgan (15), wobei das Mehrwegeventil (1) wenigstens ein einer von den Leitungen der Zu- und Abgänge des Ventilgehäuses (4) unterschiedlichen Leitung zugeordnetes Ventil (11, 12) aufweist, dessen Absperrorgan (12) zu seiner Betätigung in Wirkverbindung mit einer Steuerkurve des Stellorgans (15) steht 1. **dadurch gekennzeichnet, dass** das Mehrwegeventil (1) ein jedem Abgang (A₁ - A₃) seines Ventilgehäuses (4) zugeordnetes als Stößel (S₁ - S₃) ausgebildetes Absperrorgan. aufweist,

2. Kaffeemaschine nach Anspruch 1, **dadurch gekennzeichnet, dass** die Steuerkurve zum Betätigen des Absperrorgans (12) des wenigstens einen weiteren Ventils (11, 12) an einer anderen Oberflächenseite des Stellorgans (15) angeordnet ist als die wenigstens eine Steuerkurve zum Betätigen des oder der dem Ventilgehäuse (4) zugeordneten Absperrorgane (S₁ - S₃).

3. Kaffeemaschine nach Anspruch 1 oder 2, **dadurch gekennzeichnet, dass** das Absperrorgan des wenigstens einen Ventils (11, 12) einen Verschlusskörper (12) zum Verschließen des freien Endes der Öffnung einer Leitung ist, welcher Verschlusskörper (12) über einen Stellfortsatz verfügt, der über einen Betätigungsstößel (21) in Wirkverbindung mit der diesem Ventil zugeordneten Steuerkurve des Stellorgans (15) steht.

4. Kaffeemaschine nach Anspruch 3, **dadurch gekennzeichnet, dass** der Verschlusskörper (12) Teil eines federelastischen Bügels (13) ist und dieser durch die Federkraft des Bügels (13) in seiner das freie Ende der Öffnung der Leitung verschließenden Schließposition gehalten ist.

5. Kaffeemaschine nach einem der Ansprüche 1 bis 4, **dadurch gekennzeichnet, dass** die dem weiteren Ventil (11, 12) zugeordnete Leitung eine Luftzuführleitung ist.

6. Kaffeemaschine nach einem der Ansprüche 1 bis 5, **dadurch gekennzeichnet, dass** das Stellorgan (15) des Mehrwegeventils (1) elektromotorisch angetrieben ist.

7. Kaffeemaschine nach Anspruch 6, **dadurch gekennzeichnet, dass** das Stellorgan (15) durch einen Schneckentrieb (16, 18) angetrieben ist.

8. Kaffeemaschine nach Anspruch 7, **dadurch gekennzeichnet, dass** das Stellorgan (15) mit dem das Schneckenrad (18) des Schneckentriebes kämmenden Abtriebsritzel (16) eine gegenständliche Bewegungseinheit bildet.

9. Mehrwegeventil für eine Kaffeemaschine, umfassend ein zumindest einen Zulauf und mehrere damit in Verbindung stellbare Abgänge (A₁ - A₃) aufweisendes Ventilgehäuse (4), wenigstens ein zum Absperren eines oder mehrerer Abgänge (A₁ - A₃) dienendes Absperrorgan (S₁ - S₃) und ein mit dem wenigstens einen Absperrorgan (S₁ - S₃) über eine Schaltkulisse zum Betätigen des zumindest einen Absperrorgans in Wirkverbindung stehendes Stellorgan (15), **dadurch gekennzeichnet, dass** das Mehrwegeventil (1) die Merkmale einer der Ansprüche 1 bis 8 aufweist.

## Claims

1. A coffee machine having a multi-port valve (1) comprising a valve housing (4) which exhibits at least one inlet and a plurality of outlets (A₁ - A₃) which are adjustable in connection with said inlet, at least one shut-off device (S₁ - S₃) serving to shut-off one or a plurality of outlets, and a control element (15) operatively interacting via a selector gate with the at least one shut-off device (S₁ - S₃) to actuate the at least one shut-off device (S₁ - S₃), the multi-port valve (1) exhibiting a shut-off device being associated with each outlet (A₁ - A₃) of its valve housing (4) and configured as a plunger (S₁- S₃), **characterised in that** the multi-port valve (1) exhibits at least one valve (11, 12) that is associated with a line different from the lines of the inlet and outlets of the valve housing and whose shut-off device (12) operatively interacts with a control cam of the control element (15) to actuate said valve (11, 12).

2. A coffee machine according to claim 1 **characterised in that** the control cam to actuate the shut-off device (12) of the at least one further valve (11, 12) is arranged on a different surface side of the control element (15) to the at least one control cam to actuate the shut-off devices(s) (S₁ - S₃) associated with the valve housing (4).

3. A coffee machine according to claim 1 or 2, **characterised in that** the shut-off device of the at least one valve (11, 12) is a closure body (12) for closing the free end of the opening of a line, said closure body (12) having a control extension which operatively interacts via an actuating rod (21) with the control element's (15) control cam that is associated with this valve.

4. A coffee machine according to claim 3 **characterised in that** the closure body (12) is part of a spring-loaded bar (13) and is held by the spring force of the bar (13) in its closed position closing the free end of the opening of the line.

5. A coffee machine according to any one of claims 1 to 4 **characterised in that** the line associated with the further valve (11, 12) is an air supply line.

6. A coffee machine according to any one of claims 1 to 5 **characterised in that** the control element (15) of the multi-port valve (1) is driven by an electric motor.

7. A coffee machine according to claim 6 **characterised in that** the control element (15) is driven by a worm drive (16, 18).

8. A coffee machine according to claim 7 **characterised in that** the control element (15) forms a physical movement unit together with the output pinion (16) engaging with the worm gear (18) of the worm drive (16).

9. A multi-port valve for a coffee machine, comprising a valve housing (4) exhibiting at least one inlet and a plurality of outlets (A₁ - A₃) which are adjustable in connection with said inlet, at least one shut-off device (S₁ - S₃) serving to shut off one or a plurality of outlets (A₁ - A₃), and a control element (15) operatively interacting via a selector gate with the at least one shut-off device (S₁ - S₃) to actuate the at least one shut-off device, **characterised in that** the multi-port valve (1) exhibits the features of any one of claims 1 to 8.

## Revendications

1. Machine à café munie d'une soupape à plusieurs voies (1) comprenant un corps de soupape (4) avec au moins une arrivée et plusieurs sorties (A₁ - A₃), pouvant être raccordées de façon réglable à cette dernière, au moins un organe de verrouillage (S₁ - S₃) destiné à verrouiller une ou plusieurs sorties et au moins un organe de réglage (15) en interaction avec au moins un organe de verrouillage (S₁ - S₃) au moyen d'une coulisse de commutation destinée à actionner au moins un organe de verrouillage (S₁ - S₃), la soupape à plusieurs voies (1 ) présentant au moins une soupape (11, 12) affectée à une conduite différente des conduites des arrivées et sorties du corps de soupape (4), dont l'organe de verrouillage (12) est, afin d'être actionné, en interaction avec une came de commande de l'organe de réglage (15), **caractérisée en ce que** la soupape à plusieurs voies (1) présente dans chaque sortie (A₁ - A₃) de son corps de soupape (4) un organe de verrouillage conformé en coulisseau (S₁ - S₃).

2. Machine à café selon la revendication 1, **caractérisée en ce que** la came de commande destinée à actionner l'organe de verrouillage (12) d'au moins une autre soupape (11, 12) est disposée sur une autre face en surface de l'organe de réglage (15) que l'au moins une came de commande destinée à actionner le ou les organes de verrouillage (S₁- S₃) affectés au corps de soupape (4).

3. Machine à café selon la revendication 1 ou 2, **caractérisée en ce que** l'organe de verrouillage d'au moins une soupape (11, 12) est un corps de verrouillage (12) destiné à verrouiller l'extrémité libre de l'ouverture d'une conduite, lequel corps de verrouillage (12) dispose d'un prolongement de réglage, qui, par un coulisseau d'actionnement (21) est en interaction avec la came de commande de l'organe de réglage (15) affecté à cette soupape.

4. Machine à café selon la revendication 3, **caractérisée en ce que** le corps de verrouillage (12) fait partie d'un arceau (13) élastique à la manière d'un ressort et que celui-ci, par la force de ressort de l'arceau (13), est maintenu en position de fermeture qui verrouille l'extrémité libre de l'ouverture de la conduite.

5. Machine à café selon l'une des revendications 1 à 4, **caractérisée en ce que** la conduite affectée à l'autre soupape (11, 12) est une conduite d'arrivée d'air.

6. Machine à café selon l'une des revendications 1 à 5, **caractérisée en ce que** l'organe de réglage (15) de la soupape à plusieurs voies (1 ) est entraîné par un moteur électrique.

7. Machine à café selon la revendication 6, **caractérisée en ce que** l'organe de réglage (15) est entraîné par une vis sans fin (16, 18).

8. Machine à café selon la revendication 7, **caractérisée en ce que** l'organe de réglage (15) constitue, avec le pignon de sortie (16) qui s'engage dans la roue tangente (18), une unité matérielle de mouvement.

9. Soupape à plusieurs voies pour une machine à café, comprenant un corps de soupape (4) avec au moins une arrivée et plusieurs sorties (A₁ - A₃), pouvant être raccordées de façon réglable à cette dernière, au moins un organe de verrouillage (S₁ - S₃) destiné à verrouiller une ou plusieurs sorties (A₁ - A₃) et au moins un organe de réglage (15) en interaction avec au moins un organe de verrouillage (S₁ - S₃) au moyen d'une coulisse de commutation destinée à actionner au moins un organe de verrouillage, **caractérisée en ce que** la soupape à plusieurs voies (1) présente les caractéristiques de l'une des revendications 1 à 8.
